# EUROPEAN PATENT SPECIFICATION

(11) **EP 2 666 572 B1**
(45) Date of publication and mention of the grant of the patent: **28.12.2016**
(21) Application number: 13445002.2
(22) Date of filing: 17.05.2013
(51) Int. Cl.: B23D 63/00, B23D 63/16

(54) **Device and method for tensioning a saw chain in connection with the automatic grinding of the saw chain**
Vorrichtung und Verfahren zum Spannen einer Sägekette in Zusammenhang mit dem automatischen Schleifen der Sägekette
Dispositif et procédé de mise en tension d'une chaîne de scie en connexion avec le meulage automatique de ladite chaîne

(30) Priority: 22.05.2012 SE 1200309
(43) Date of publication of application: 27.11.2013
(73) Proprietor: Markusson, Pär Mikael, 762 31 Rimbo (SE)
(72) Inventor: Markusson, Pär Mikael, 762 31 Rimbo (SE)
(74) Representative: Ehrner & Delmar Patentbyrå AB

(56) References cited:
- WO-A1-88/09237
- WO-A1-90/14915
- US-A- 2 480 546

## Description

### Technical field of the invention

This invention relates to a device for tensioning a saw chain when automatically grinding the saw chain, wherein the device for the automatic grinding of the saw chain comprises chain rulers, means for advancing the chain along the chain rulers, means for fixing the chain relative to the chain rulers, and means for positioning a rotating grinding wheel that is part of the device and can be switched between two positions for grinding right links and left links. The invention also relates to a method for tensioning a saw chain when automatically grinding the saw chain.

### Prior art

When grinding saw chains, it is important that these are tensioned along the chain rulers that support the saw chain. The problem with today's saw chains is that they are lubricated using the vegetable oils that have come to replace normal mineral oil. This means that the articulated joint between two adjacent links in a saw chain sticks. To grind a saw chain properly the saw chain links must fit snugly into the chain rulers. If the articulated joint between the links sticks this inhibits the snug contact of the saw chain links with the chain rulers.

In this context prior art is to manually hang a weight on the chain so as to straighten it and abuts the chain rulers in an acceptable way. However, one must normally carry out manual preparatory work, lubricating the chain and in particular the articulated joints between the links, and manually straightening out the chain. The weight of the chain is normally no more than 5 kg when it is manually lifted on and off. Manually handling this weight is perceived as troublesome and even though the weight is only 5 kg, the risk of repetitive strain injury cannot be ruled out.

WO 8809237 discloses an arrangement for automatic chain grinders, said arrangement comprising a driving means for the saw chain; however, there is no active means of displacing the driving means so as to tension the saw chain, as the drive means is manually locked in place.

US 2,480,546 discloses a device for grinding/filing a saw chain. This device comprises an idle pulley for tensioning the saw chain that is displaced by means of a spring exerting a permanent force. The saw chain being subject to permanent tensioning is a drawback with regard to advancing the saw chain.

### Object and features of the invention

A primary object of the present invention is to provide a device and a method of the type defined above, which automatically tensions a saw chain during the automatic grinding of the saw chain.

Another object of the present invention is to synchronise chain advance and tensioning so that these do not interfere with each other.

A further object of the present invention is that the device can be mounted on existing devices for the automatic grinding of the saw chain.

At least the primary object of the present invention is achieved by means of a device and a method that have the features indicated in the following independent claims. The preferred embodiments of the invention are defined in the dependent claims.

### Brief description of the drawings

A number of embodiments of the invention will be described with reference to the enclosed drawings below, in which:
- Figure 1: shows a front view of a device of the present invention mounted on a schematically depicted device for the automatic grinding of saw chains;
- Figure 2: shows a front view of a component of the device in Figure 1;
- Figure 3: shows a front view of a first alternative embodiment of a device according to the present invention mounted on a schematically depicted device for the automatic grinding of saw chains;
- Figure 4: shows a front view of a component of the device in Figure 3;
- Figure 5: shows a front view of a second alternative embodiment of a device of the present invention mounted on a schematically depicted device for the automatic grinding of saw chains;
- Figure 6: shows a front view of a component of the device in Figure 5;

### Detailed description of the preferred embodiments of the invention

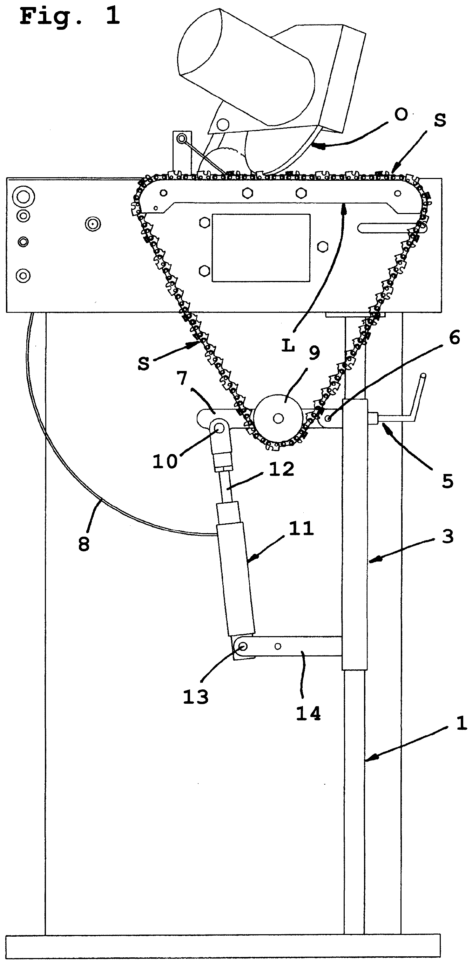

The device for the automatic grinding of saw chains schematically depicted in Figure 1 comprises parallel chain rulers (L) supporting part of the saw chain (S) to be ground. Chain rulers (L) are arranged with a certain spacing and in the gap formed parts of the drive links of the saw chain (S) are received. As shown in Figure 1 the saw chain (S) is infinite, i.e. it forms a closed loop, wherein the saw chain (S) defines a plane that is normally a vertical plane. Above the part of the saw chain (S) that is supported by the chain rulers (L) a grinding means (O) is arranged which in the case depicted constitutes a grinding wheel.

In this context it should be pointed out that in the device for the automatic grinding of a saw chain (S) the chain rulers (L) exhibit a straight upper edge with which the saw chain (S) is in contact. However, there are also devices in which the chain rulers exhibit a curvilinear upper edge on which a saw chain is in contact. The device of the present invention to tension a saw chain also works with a curved upper edge.

The device of the present invention is mounted below the chain rulers (L), wherein the device comprises a tube 1 that extends vertically which tube is suitably anchored to the device for automatic grinding. A sleeve 3 that forms part of the device of the present invention is mounted on the tube 1 and can be moved along the tube 1, wherein the sleeve 3 by means of a locking device 5 can be fixed at any height along the tube 1. The reason that the sleeve 3 can be moved along the tube 1 is that this allows adaptation for saw chains (S) of various circumferences.

An articulated joint 6 allows a support arm 7 to be pivotally mounted to the upper section of sleeve 3, wherein the support arm 7 can generally be pivoted in a vertical plane. A driving means in the form of a wheel 9 is mounted on the support arm 7, wherein the wheel 9 is rotatably mounted on the support arm 7 and in an intermediate section of the support arm 7. The perimeter of the wheel 9 is designed so that it can properly interact with the saw chain (S) when this is in contact with part of the perimeter of wheel 9.

The end of the support arm 7 facing away from the sleeve 3, is connected to a pressure medium cylinder 11 through a first articulated joint 10, or more specifically hingedly connected to the free end of a piston rod 12 on the pressure medium cylinder 11. Generally the pressure medium cylinder 11 assumes a vertical position. The end of the pressure medium cylinder 11 facing away from the free end of the piston rod 12 is connected via a second articulated joint 13 to the free end of a strut 14 which is fixedly connected to a lower section of the sleeve 3. A conduit 8 supplies pressure medium, normally compressed air, to the pressure medium cylinder 11.

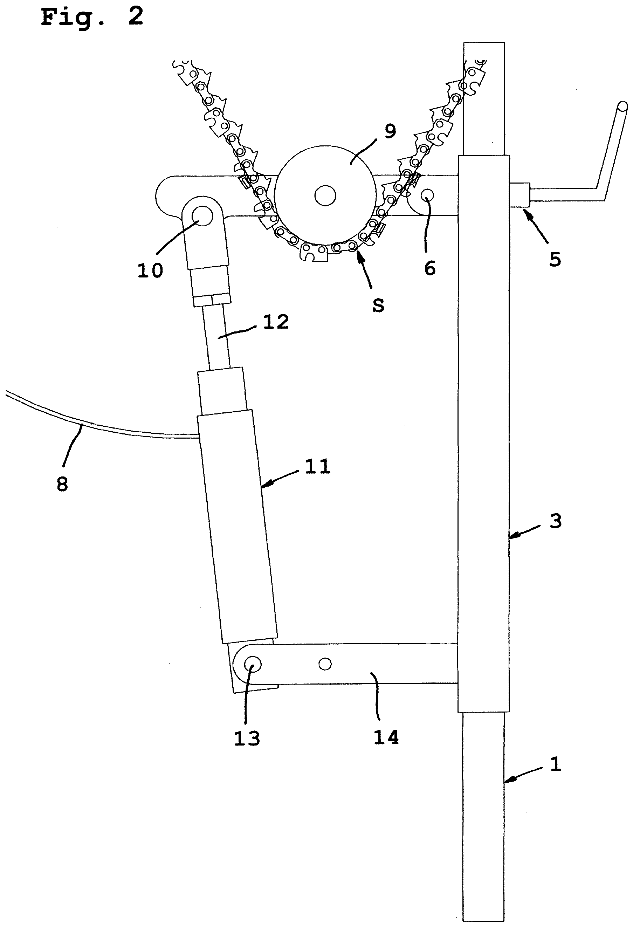

The study of Figures 1 and 2 makes it clear that if the piston rod 12 is pushed into the pressure medium cylinder 11 housing, the saw chain (S) will be tensioned as the wheel 9 will move away from the chain rulers (L). By way of example and not of limitation it should be noted that the force applying active tension to the saw chain (S) is normally in the range 400-800 N.

By using an appropriate means of command and control tensioning is only activated when the fixing of saw chain (S) relative to chain rulers (L) is taking place, wherein grinding device (O) carries out the grinding of saw chain (S) when this is fixed relative to the chain rulers (L). The fixing is effected when the chain rulers (L) clamp the part of the drive links of the chain S that is located between the rulers L. Tensioning is activated through the sending of an activation signal to the pressure medium cylinder 11 when saw chain (S) is fixed relative to chain rulers (L). When the fixing of the saw chain (S) relative to chain rulers (L) is released, a deactivation signal is sent to the pressure medium cylinder 11, wherein this means that the pressure on piston rod 12 ceases or is reduced. This stops the active tensioning of the saw chain (S) or that tensioning takes place with significantly lower force that does not prevent the advance of saw chain (S). By way of example and not of limitation it should be noted that the remaining force tensioning the chain when deactivation has taken place is normally in the range 10-50 N.

When tensioning of the saw chain (S) is deactivated the advance of the saw chain (S) can take place relative to chain rulers (L) so that the saw chain (S) moves to a new position for grinding. After that the saw chain (S) is fixed relative to the chain rulers (L) again and the tensioning function for the saw chain (S) is activated by the piston rod 12 being pushed into the housing of pressure medium cylinder 11. By repeatedly cycling the procedure described above, the grinding of the saw chain (S) takes place, wherein the saw chain (S) is kept tensioned while the grinding of selected sections of the saw chain (S) takes place.

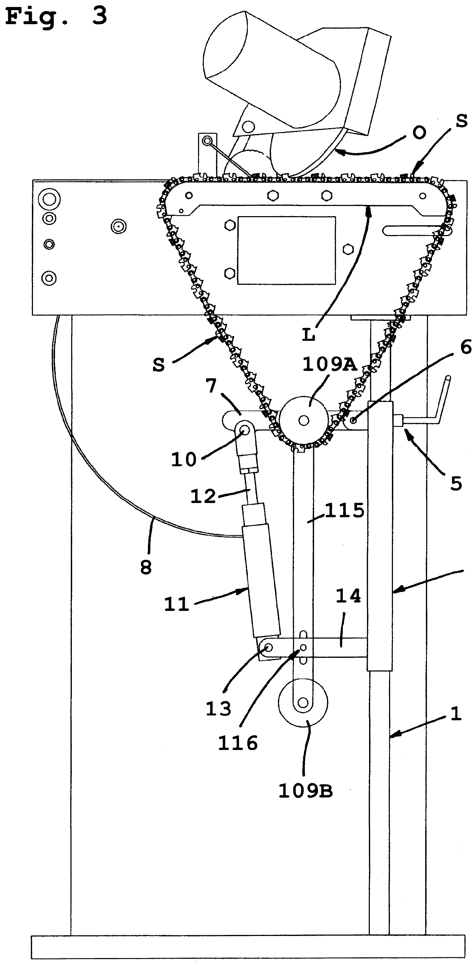

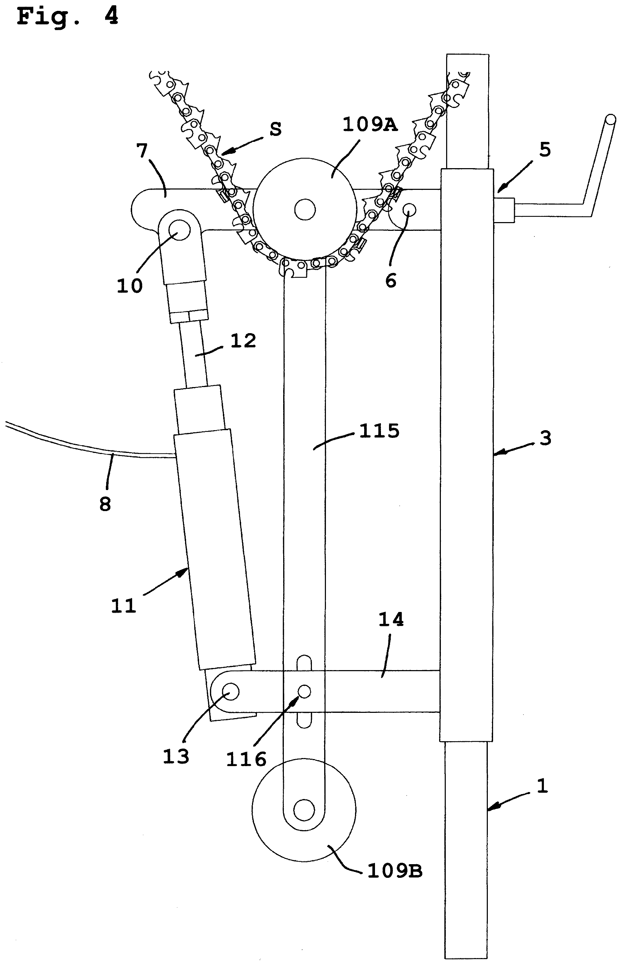

Figures 3 and 4 show an alternative embodiment of the device of the present invention. This embodiment differs from the embodiment in Figures 1 and 2 in the design of the driving means. Other components of the device are basically identical with the embodiment in Figures 1 and 2, which is why these identical components have been given the same reference numbers as in Figures 1 and 2.

The driving means comprises a first wheel 109A and a second wheel 109B, wherein a rod 115 extends between the first wheel 109A and the second wheel 109B. The first wheel 109A is rotatably attached to the support arm 7 and the second wheel 109B is rotatably attached to the free end of the rod 115. A control arrangement 116 between the rod 115 and the strut 14 ensures that the rod 115 moves to a vertical position. As a result the embodiment shown in Figures 3 and 4 can handle saw chains (S) of extremely different lengths, wherein the second wheel 109B is used for very long saw chains (S). Synchronisation of saw chain tensioning when the saw chain (S) is fixed relative to the chain rulers (L) takes place in a corresponding way as described above for the embodiments in Figures 1 and 2.

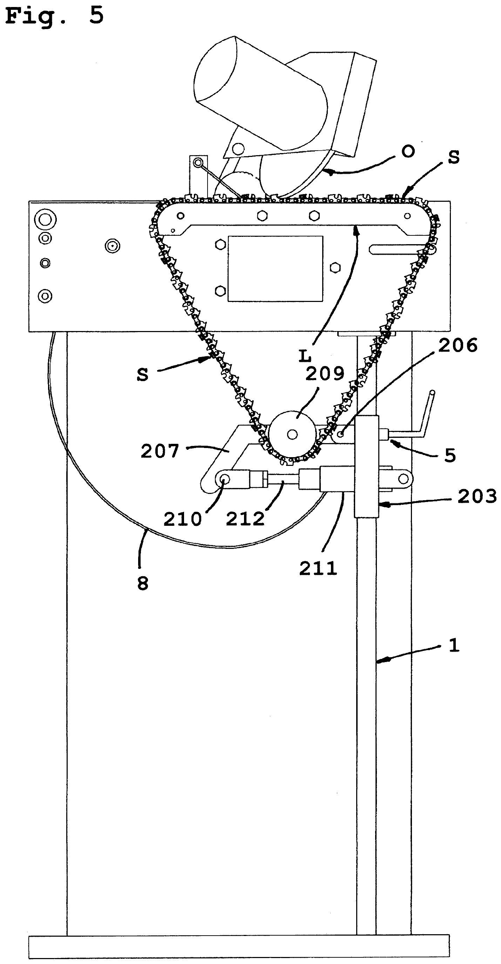

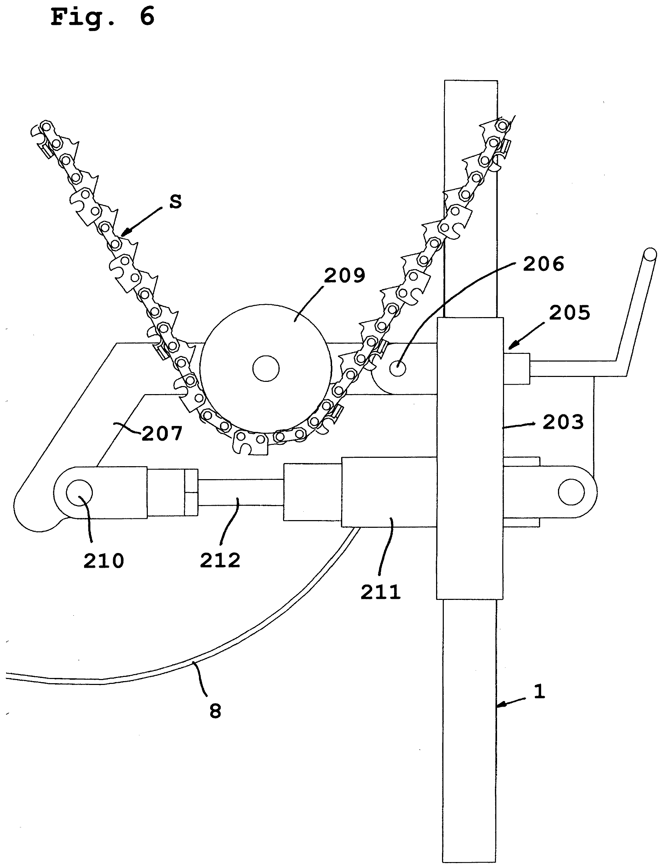

Figures 5 and 6 show a further alternative embodiment of the device of the present invention, wherein the pressure medium cylinder 211 is generally oriented horizontally. Pressure medium cylinder 211 is fixedly connected to a sleeve 203 and the free end piston rod 212 via a first articulated joint 210 pivotally connected to a support arm 207 which supports a wheel 209 which is rotatably supported by the support arm 207. The end of the supporting arm 207 facing away from the first articulated joint 210 is pivotally connected to an upper section of the sleeve 203.

The study of Figures 5 and 6 makes it clear that when the piston rod 212 is moved into the pressure medium cylinder 211 housing the saw chain (S) will be tensioned, and when piston rod 212 is moved out of the pressure medium cylinder 211 housing the saw chain (S) will slacken off. Synchronisation of saw chain tensioning when saw chain (S) is fixed relative to chain rulers (L) takes place in a corresponding way as described above for the embodiments in Figures 1 and 2.

### Possible modifications of the invention

In the embodiments of the device of the present invention described above, the driving means comprises a rotating wheel 9. Within the scope of the present invention the driving means need not be a rotatably mounted component. The driving means can conceivably comprise a disc-shaped nonrotating member which is provided with a groove on the side of the driving means facing the saw chain (S). When the tensioning function is deactivated the saw chain (S) can slide relative to the driving means when the saw chain (S) advances.

In the embodiments of the device of the present invention described above a pressure medium cylinder is used to achieve the activation and deactivation of the tensioning function of saw chain (S). However, within the scope of the present invention it is conceivable that an electric motor provided with an eccentric on the output shaft of the electric motor be used, wherein this eccentric acts on the driving means so that this moves to an activated position in which the saw chain (S) is tensioned and to a deactivated position where the saw chain (S) is slackened of allowing the simple advance of the saw chain (S).

In the embodiments described above the free end of the piston rod 12; 212 is connected to a supporting arm 7; 207. However, within the scope of the present invention it is conceivable that the free end of the piston rod 12; 212 be connected directly to the driving means/wheel 2; 209.

## Claims

1. Device for tensioning a saw chain (S) for the automatic grinding of the saw chain (S), wherein the device for the automatic grinding of the saw chain (S) comprises chain rulers (L), means for advancing the saw chain (S) along the chain rulers (L), means for fixing the saw chain (S) relative to the chain rulers (L), and a means of grinding (0) which comprises a rotatable grinding wheel, the device for tensioning the saw chain (S) comprising a driving means (9; 109A, 109B; 209), means (7; 207) for supporting the driving means (9; 109A, 109B, 209) and means (11, 12; 211, 212) to move said driving means (9; 109A, 109B; 209) away from the chain rulers (L), **characterised in that** the device comprises a means of command and control to switch the means of moving (11, 12; 211, 212) the driving means between an activated position and a deactivated position.

2. Device according to claim 1, **characterised in that** the means of supporting the driving means (9; 109A, 109B; 209) comprises a support arm (7; 207) which is pivotable in a plane essentially parallel to the plane defined by saw chain (S) .

3. Device according to claims 1 or 2, **characterised in that** the means of moving the driving means (9; 109A, 109B; 209) away from the chain ruler (L) comprises a pressure medium cylinder (11, 12; 211, 212).

4. Device according to claims 2 and 3, **characterised in that** one free end of a piston rod (12; 212) on the pressure medium cylinder (11; 211) is hingedly attached to a free end of the support arm (7; 207).

5. Device according to any of the preceding claims, **characterised in that** the driving means (9, 109A, 109B; 209) comprises a rotatably mounted wheel.

6. Method for tensioning a saw chain (S) for the automatic sharpening of the saw chain (S), wherein a device for automatically grinding the saw chain (S) comprises chain rulers (L) which support a section of the saw chain (S), and the tensioning of the saw chain (S) takes place after the saw chain (S) has been fixed relative to the chain rulers (L), **characterised in that** the tensioning of the saw chain (S) is effected by means of moving the driving means (9; 109A, 109B; 209) between an activated position and a de-activated position.

7. The method of claim 6, **characterised in that** when the saw chain (S) is advanced relative to the chain rulers (L) the tensioning of the saw chain (S) is deactivated.

## Patentansprüche

1. Vorrichtung zum Spannen einer Sägekette (S) zum automatischen Schleifen der Sägekette (S), wobei die Vorrichtung zum automatischen Schleifen der Sägekette (S) Kettenrichtvorrichtungen (L), Mittel zum Vorwärtsbewegen der Sägekette (S) entlang den Kettenrichtvorrichtungen (L), Mittel zum Fixieren der Sägekette (S) bezüglich der Kettenrichtvorrichtungen (L) und ein Mittel zum Schleifen (O), das eine drehbare Schleifscheibe umfasst, umfasst, wobei die Vorrichtung zum Spannen der Sägekette (S) ein Antriebsmittel (9; 109A, 109B; 209), Mittel (7; 207) zum Stützen des Antriebsmittels (9; 109A, 109B; 209) und Mittel (11, 12; 211, 212) zum Bewegen des Antriebsmittels (9; 109A, 109B; 209) von den Kettenrichtvorrichtungen (L) weg umfasst, **dadurch gekennzeichnet, dass** die Vorrichtung ein Mittel zum dahingehenden Ansteuern und Steuern, die Mittel (11, 12; 211, 212) zum Bewegen des Antriebsmittels zwischen einer aktivierten Stellung und einer deaktivierten Stellung umzuschalten, umfasst.

2. Vorrichtung nach Anspruch 1, **dadurch gekennzeichnet, dass** das Mittel zum Stützen des Antriebsmittels (9; 109A, 109B; 209) einen Stützarm (7; 207) umfasst, der in einer Ebene, die zu der durch die Sägekette (S) definierten Ebene im Wesentlichen parallel verläuft, schwenkbar ist.

3. Vorrichtung nach Anspruch 1 oder 2, **dadurch gekennzeichnet, dass** das Mittel zum Bewegen des Antriebsmittels (9; 109A, 109B; 209) von der Kettenrichtvorrichtung (L) weg einen Druckmediumzylinder (11, 12; 211, 212) umfasst.

4. Vorrichtung nach Anspruch 2 und 3, **dadurch gekennzeichnet, dass** ein freies Ende einer Kolbenstange (12; 212) an dem Druckmediumzylinder (11; 211) an einem freien Ende des Stützarms (7; 207) gelenkig angebracht ist.

5. Vorrichtung nach einem der vorgehenden Ansprüche, **dadurch gekennzeichnet, dass** das Antriebsmittel (9; 109A, 109B; 209) ein drehbar befestigtes Rad umfasst.

6. Verfahren zum Spannen einer Sägekette (S) zum automatischen Schärfen der Sägekette (S), wobei eine Vorrichtung zum automatischen Schleifen der Sägekette (S) Kettenrichtvorrichtungen (L), die einen Abschnitt der Sägekette (S) stützen, umfasst und das Spannen der Sägekette (S) erfolgt, nachdem die Sägekette (S) bezüglich der Kettenrichtvorrichtungen (L) fixiert worden sind, **dadurch gekennzeichnet, dass** das Spannen der Sägekette (S) durch Mittel zum Bewegen des Antriebsmittels (9; 109A, 109B; 209) zwischen einer aktivierten Stellung und einer deaktivierten Stellung durchgeführt wird.

7. Verfahren nach Anspruch 6, **dadurch gekennzeichnet, dass** das Spannen der Sägekette (S) deaktiviert ist, wenn die Sägekette (S) bezüglich den Kettenrichtvorrichtungen (L) vorwärtsbewegt wird.

## Revendications

1. Dispositif pour tendre une chaîne de scie (S) pour le meulage automatique de la chaîne de scie (S), le dispositif pour le meulage automatique de la chaîne de scie (S) comprenant des règles de chaîne (L), des moyens pour faire avancer la chaîne de scie (S) le long des règles de chaîne (L), des moyens pour fixer la chaîne de scie (S) par rapport aux règles de chaîne (L), et un moyen de meulage (O) qui comprend une meule rotative, le dispositif pour tendre la chaîne de scie (S) comprenant un moyen d'entraînement (9 ; 109A, 109B ; 209), des moyens (7 ; 207) pour supporter les moyens d'entraînement (9 ; 109A, 109B ; 209) et des moyens (11, 12 ; 211, 212) pour déplacer lesdits moyens d'entraînement (9 ; 109A, 109B ; 209) à l'écart des règles de chaîne (L), **caractérisé en ce que** le dispositif comprend un moyen de commande et de contrôle pour commuter les moyens (11, 12 ; 211, 212) de déplacement des moyens d'entraînement entre une position activée et une position désactivée.

2. Dispositif selon la revendication 1, **caractérisé en ce que** les moyens pour supporter les moyens d'entraînement (9 ; 109A, 109B ; 209) comprennent un bras de support (7 ; 207) qui peut pivoter dans un plan essentiellement parallèle au plan défini par la chaîne de scie (S).

3. Dispositif selon la revendication 1 ou 2, **caractérisé en ce que** les moyens pour déplacer les moyens d'entraînement (9 ; 109A, 109B ; 209) à l'écart de la règle de chaîne (L) comprennent un cylindre de milieu sous pression (11, 12 ; 211, 212).

4. Dispositif selon les revendications 2 et 3, **caractérisé en ce qu'**une extrémité libre d'une tige de piston (12 ; 212) sur le cylindre de milieu sous pression (11 ; 211) est attachée de manière articulée à une extrémité libre du bras de support (7 ; 207).

5. Dispositif selon l'une quelconque des revendications précédentes, **caractérisé en ce que** les moyens d'entraînement (9 ; 109A, 109B ; 209) comprennent une roue montée à rotation.

6. Procédé pour tendre une chaîne de scie (S) pour affûter automatiquement la chaîne de scie (S), un dispositif pour meuler automatiquement la chaîne de scie (S) comprenant des règles de chaîne (L) qui supportent une section de la chaîne de scie (S) et le tensionnement de la chaîne de scie (S) ayant lieu après que la chaîne de scie (S) a été fixée par rapport aux règles de chaîne (L), **caractérisé en ce que** le tensionnement de la chaîne de scie (S) est effectué au moyen d'un déplacement des moyens d'entraînement (9 ; 109A, 109B ; 209) entre une position activée et une position désactivée.

7. Procédé selon la revendication 6, **caractérisé en ce que** lorsque la chaîne de scie (S) est avancée par rapport aux règles de chaîne (L), le tensionnement de la chaîne de scie (S) est désactivé.
